# FASCICULE DE BREVET EUROPEEN

(11) **EP 0 780 558 B1**
(45) Date de publication et mention de la délivrance du brevet: **18.08.1999**
(21) Numéro de dépôt: 96402846.8
(22) Date de dépôt: 20.12.1996
(51) Int. Cl.: F02D 19/12, F02M 25/022

(54) **Dispositif d'alimentation en combustible liquide d'un moteur à combustion interne diesel**
Flüssigbrennstoffzufuhrvorrichtung für eine Dieselbrennkraftmaschine
Liquid fuel supply device for a diesel internal combustion engine

(30) Priorité: 21.12.1995 FR 9515286; 10.01.1996 FR 9600212
(43) Date de publication de la demande: 25.06.1997
(73) Titulaire: S.E.M.T. Pielstick, 93200 Saint Denis (FR)
(72) Inventeur: Bastenhof, Dirk, 95600 Eaubonne (FR)
(74) Mandataire: Busnel, Jean-Benoît

(56) Documents cités:
- WO-A-80/01190
- WO-A-95/06805
- US-A- 4 388 893
- MOTORSHIP, vol. 70, no. 829, 1 Août 1989, page 17/18 XP000095323 "THE USE OF EMULSIFIED FUELS"
- PATENT ABSTRACTS OF JAPAN vol. 010, no. 246 (M-510), 23 Août 1986 & JP 61 076747 A (SNOW BRAND MILK PROD CO LTD;OTHERS: 01), 19 Avril 1986,
- PATENT ABSTRACTS OF JAPAN vol. 010, no. 231 (M-506), 12 Août 1986 & JP 61 065066 A (TOYOTA MOTOR CORP), 3 Avril 1986,

## Description

La présente invention concerne les moteurs à combustion interne diesel, en général, et porte, plus particulièrement, sur un dispositif d'alimentation en combustible liquide d'un moteur à combustion interne diesel, le combustible liquide pouvant être additionné d'un autre liquide, destiné par exemple à modifier les caractéristiques de combustion.

Les moteurs à combustion interne diesel de ce type comportent généralement une alimentation constituée par une boucle fermée amenant le combustible à l'entrée de pompes d'injection comme décrit notamment dans l'article "The use of Emulsified Fuels" de la publication "The Motor Ship" vol.70 n° 289 du 1/8/89 (pages 17 et 18).

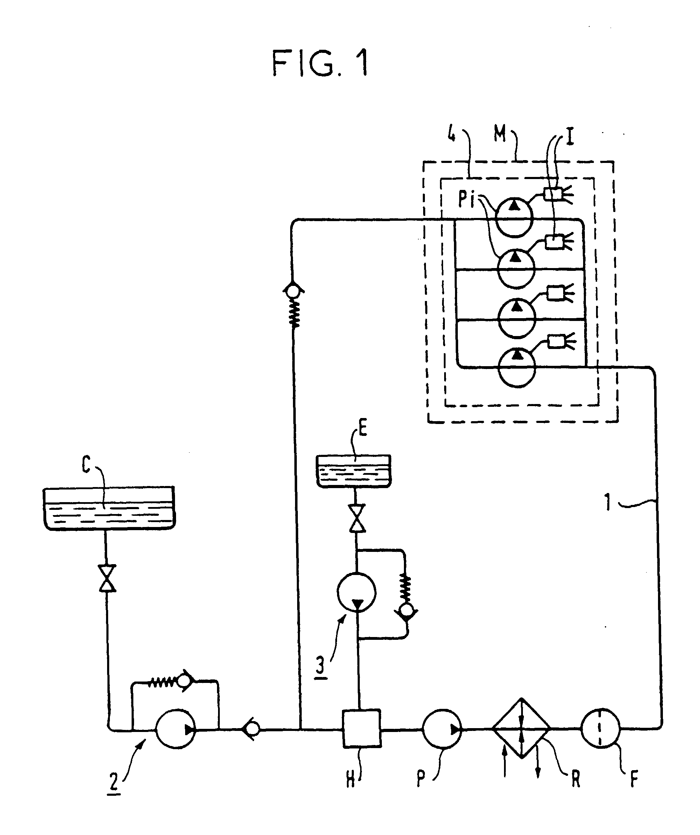

Une telle alimentation est par exemple représentée à la figure 1 jointe.

La partie de la boucle raccordée aux pompes d'injection est sous une pression de circulation de l'ordre de 5 à 6 bars.

Cette boucle fermée amenant le combustible à l'entrée des pompes d'injection comporte un point d'introduction du combustible, un dispositif d'introduction du liquide additionnel et d'homogénéisation, une pompe de circulation, un dispositif de réchauffage, un dispositif de filtration et enfin l'ensemble des pompes d'injection et les injecteurs du moteur.

Sur les moteurs de forte puissance, le mélange liquide additionnel-combustible représente un volume important circulant, ce qui entraîne plusieurs inconvénients.

Un premier inconvénient des dispositifs d'alimentation en combustible liquide d'un moteur à combustion interne diesel est l'importance du temps nécessaire pour passer d'un fonctionnement du type combustible seul à un fonctionnement du type liquide additionnel-combustible et inversement.
Un autre inconvénient des dispositifs d'alimentation en combustible liquide d'un moteur à combustion interne diesel est l'importance du temps nécessaire à l'adaptation de la proportion de la quantité de liquide additionnel dans le combustible en fonction de la variation de charge du moteur.

Un autre inconvénient des dispositifs d'alimentation en combustible liquide d'un moteur à combustion interne diesel est le coût élevé du dispositif d'homogénéisation liquide additionnel-combustible du fait que ce dispositi d'homogénéisation doit assurer une émulsion dont la stabilité et la bonne combustion exige que les goutelettes de liquide additionnel n'excèdent pas 10 µm.

Aussi un but de l'invention est-il un dispositi d'alimentation en combustible liquide d'un moteur combustion interne diesel ne présentant pas le inconvénients des dispositifs de l'art antérieur.

Conformément à l'invention, le dispositi d'alimentation en combustible liquide d'un moteur à combustion interne diesel, ledit dispositif comportant un ensemble de pompes d'injection dudit moteur, une conduite d'alimentation en combustible dudit ensemble de pompes d'injection, ladite conduite d'alimentation formant une boucle d'alimentation et comportant une conduit d'entrée dudit combustible, des moyens de traitement et de circulation dudit combustible et une conduite d'introduction de liquide additionnel dans ledit combustible, se caractérise en ce que le point de raccordement de ladite conduite d'introduction de liquide additionnel à ladite conduite d'alimentation en combustible est situé immédiatement en amont dudit ensemble des pompes d'injection et en ce qu'une vanne de fermeture, susceptible de fermer ladite conduite d'alimentation, est située immédiatement en aval dudit ensemble des pompes d'injection.

Le dispositif d'alimentation en combustible liquide d'un moteur à combustion interne diesel de l'invention satisfait également à l'une quelconque des caractéristiques suivantes:
- le point de raccordement de ladite conduite d'introduction de liquide additionnel à ladite conduite d'alimentation en combustible se compose d'un mélangeur dudit liquide additionnel et dudit combustible,
- ledit mélangeur est tel que les gouttes de liquide additionnel ont une taille inférieure ou égale à 0,5 mm,
- ladite conduite d'alimentation en combustible desdites pompes d'injection comprend un dispositif de mesure du débit de combustible circulant dans ladite conduite d'alimentation, ledit dispositif de mesure étant associé à un dispositif de régulation du débit de liquide additionnel injecté dans ladite conduite d'alimentation.

D'autres buts, caractéristiques et avantages de l'invention apparaîtront à la lecture de la description du mode de réalisation préféré du dispositif d'alimentation en combustible liquide d'un moteur à combustion interne diesel, description faite en liaison avec les dessins dans lesquels:
- la figure 1 est une représentation synoptique d'un dispositif d'alimentation en combustible liquide d'un moteur à combustion interne diesel selon l'art antérieur,
- la figure 2 est une représentation synoptique d'un dispositif d'alimentation en combustible liquide d'un moteur à combustion interne diesel conforme à l'invention.

La figure 1 est une représentation synoptique d'un dispositif d'alimentation en combustible liquide d'un moteur à combustion interne diesel selon l'art antérieur, dans lequel le liquide additionnel est de l'eau.

Comme décrit précédemment, une conduite d'alimentation 1 fermée amène un combustible C à l'entrée des pompes d'injection Pᵢ d'un moteur M.

Cette conduite d'alimentation 1 en boucle fermée reçoit une conduite d'entrée 2 du combustible C, une conduite d'introduction 3 d'eau E, une pompe de circulation P, un dispositif de réchauffage R, un dispositif de filtration F et enfin un ensemble 4 de pompes d'injection Pᵢ et d'injecteurs I du moteur M.

L'extrémité de la conduite d'introduction 3 d'eau E dans la conduite d'alimentation en combustible C se compose d'un dispositif d'homogénéisation H de l'eau E et du combustible C.

Un tel dispositif d'alimentation en combustible C liquide d'un moteur M à combustion interne diesel comporte donc principalement une conduite d'alimentation en combustible des pompes d'injection Pᵢ du moteur M.

La conduite d'alimentation forme une boucle d'alimentation et comporte une conduite d'entrée 2 du combustible C, des moyens de traitement et de circulation du combustible C et une conduite d'introduction 3 de l'eau E dans le combustible C.

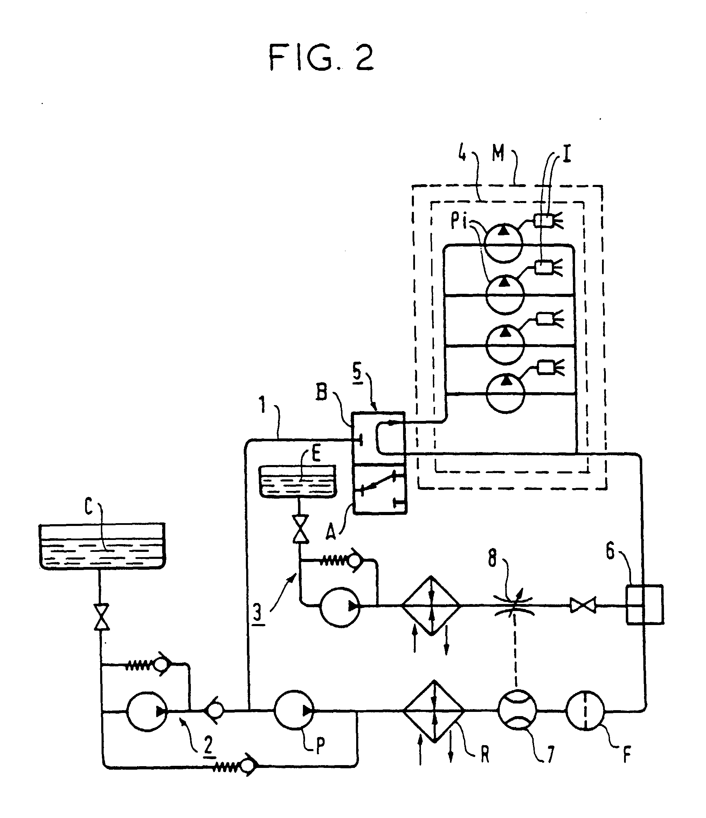

La figure 2 est une représentation synoptique d'un dispositif d'alimentation en combustible liquide d'un moteur à combustion interne diesel conforme à l'invention, dans lequel le liquide additionnel est de l'eau.

Ce dispositif d'alimentation en combustible C liquide d'un moteur M à combustion interne diesel de l'invention comporte également une conduite d'alimentation 1 en combustible des pompes d'injection Pᵢ du moteur M.

La conduite d'alimentation 1 forme une boucle d'alimentation et comporte une conduite d'entrée 2 du combustible C, des moyens de traitement et de circulation du combustible C et une conduite d'introduction 3 de l'eau E dans le combustible C.

Le dispositif d'alimentation en combustible C liquide d'un moteur à combustion interne diesel de l'invention se distingue des dispositifs d'alimentation de l'art antérieur en ce que la conduite d'introduction 3 d'eau dans la conduite d'alimentation 1 en combustible est située immédiatement en amont de la partie 4 de la conduite d'alimentation 1 qui alimente les pompes d'injection Pᵢ du moteur M.

De plus, une vanne de fermeture 5, susceptible de fermer ladite conduite d'alimentation 1, est située immédiatement en aval de la partie 4 de la conduite d'alimentation 1 qui alimente les pompes d'injection Pᵢ du moteur M.

Cette vanne de fermeture 5 est susceptible de fonctionner selon un premier mode de fonctionnement noté A ou selon un second mode de fonctionnement noté B.

Conformément à un mode de réalisation préféré, l'extrémité de la conduite d'introduction 3 d'eau E dans la conduite d'alimentation 1 en combustible C se compose d'un mélangeur 6 d'eau E et de combustible C.

Le mélangeur 6 est de préférence tel que les gouttes d'eau ont une taille inférieure ou égale à 0,5 mm.

La conduite d'alimentation 1 en combustible des pompes d'injection Pᵢ comprend un dispositif de mesure 7 du débit de combustible circulant dans la conduite d'alimentation 1.

Le dispositif de mesure 7 de débit pilote un dispositif de régulation 8 du débit d'eau injecté dans la conduite d'alimentation 1.

La description qui suit porte sur le fonctionnement du dispositif d'alimentation en combustible liquide d'un moteur à combustion interne diesel de l'invention.

En dessous d'une valeur donnée de charge du moteur, par exemple une charge dont la valeur est située entre 20 et 50%, la vanne de fermeture 5 fonctionne conformément au mode de fonctionnement noté A et l'introduction d'eau est interrompue.

Le moteur fonctionne alors avec une boucle d'alimentation dont la disposition est connue.

Avant le démarrage du moteur, cette boucle d'alimentation permet le réchauffage des organes, ainsi que la purge ou le nettoyage des circuits.

En fonctionnement au dessus d'une valeur de charge du moteur située entre 20 et 50%, de l'eau, destinée par exemple à la diminution des oxydes d'azote, est introduite dans la conduite d'alimentation.

Conjointement à cette introduction, la vanne de fermeture fonctionne conformément au mode de fonctionnement noté B ce qui a pour effet une interruption de la boucle.

Cette interruption évite d'avoir un volume de mélange eau-combustible circulant dans la conduite d'alimentation trop important, ayant peu d'inertie aux variations de proportion d'eau et permettant de revenir au fonctionnement en boucle sans eau en un temps court.

La distance faible prévue entre le point d'introduction d'eau et la rampe d'alimentation des pompes d'injection alliée à une absence de circulation en boucle autorise une introduction d'eau assez grossière conduisant à un mélange instable mais garantissant une répartition locale correcte de l'eau et du combustible.

Ce mélange n'a, de plus, pas le temps de se déstabiliser avant son arrivée aux pompes d'injection qui, par leur fonctionnement, assurent lors du refoulement une homogénéisation plus fine du mélange, à savoir que les goutelettes d'eau n'excèdent pas 10 µm.

Le dispositif de mesure du débit de combustible pilotant la régulation du débit d'eau assure une proportion fixée de la quantité d'eau dans le combustible.

## Revendications

1. Dispositif d'alimentation en combustible (C) liquide d'un moteur à combustion interne diesel, ledit dispositif comportant un ensemble de pompes d'injection (Pi) dudit moteur, une conduite d'alimentation (1) en combustible dudit ensemble de pompes d'injection (Pi), ladite conduite d'alimentation (1) formant une boucle d'alimentation et comportant une conduite d'entrée (2) dudit combustible (C), des moyens de traitement et de circulation dudit combustible (C) et une conduite d'introduction (3) de liquide additionnel (E) dans ledit combustible (C), caractérisé en ce que le point de raccordement de ladite conduite d'introduction (3) de liquide additionnel à ladite conduite d'alimentation (1) en combustible est situé immédiatement en amont dudit ensemble des pompes d'injection, et en ce qu'une vanne de fermeture (5), susceptible de fermer ladite conduite d'alimentation (1) est située immédiatement en aval dudit ensemble des pompes d'injection (Pi).

2. Dispositif selon la revendication 1, dans lequel le point de raccordement de ladite conduite d'introduction (3) de liquide additionnel (E) à ladite conduite d'alimentation (1) en combustible (C) se compose d'un mélangeur (6) dudit liquide additionnel (E) et dudit combustible (C).

3. Dispositif selon la revendication 2, dans lequel ledit mélangeur (6) est tel que les gouttes de liquide additionnel ont une taille inférieure ou égale à 0,5 mm.

4. Dispositif selon l'une quelconque des revendications 1 à 3, dans lequel ladite conduite d'alimentation (1) en combustible desdites pompes d'injection (Pi) comprend un dispositif de mesure (7) du débit de combustible circulant dans ladite conduite d'alimentation (1), ledit dispositif de mesure (7) pilotant un dispositif de régulation (8) du débit de liquide additionnel injecté dans ladite conduite d'alimentation (1).

5. Procédé d'alimentation d'un moteur (M) à combustion interne diesel avec un combustible liquide éventuellement mélangé avec un liquide additionnel (E), caractérisé en ce que pour une charge dudit moteur comprise entre 20% et 50% on alimente un ensemble de pompes d'injection (Pi) dudit moteur (M) par un premier mode (A) au moyen d'une conduite (1) en boucle fermée sans introduction de liquide additionnel (E), et en ce que pour toute augmentation de la valeur de cette charge, on alimente ledit moteur par un second mode (B) au moyen d'une conduite (1) en boucle ouverte avec introduction de liquide additionnel (E) immédiatement en amont dudit ensemble de pompes d'injection (Pi).

6. Procédé selon la revendication 5, caractérisé en ce qu'on passe du premier mode d'alimentation (A) au second mode (B) en commandant une vanne de fermeture (5) à deux voies, située immédiatement en aval dudit ensemble de pompes d'injection (Pi).

## Claims

1. A device for feeding liquid fuel (C) to a diesel-type I.C. engine, said device comprising an injection pump assembly (Pi) of said engine, a pipe (1) feeding fuel to said injection pump assembly (Pi), said feed pipe (1) forming a feed loop and comprising a pipe (2) for admission of said fuel (C), means for treating and circulating said fuel (C) and a pipe (3) for introducing additional liquid (E) into said fuel (C), characterised in that the point of connection of said pipe (3) for introducing additional liquid to said fuel feed pipe (1) is located immediately upstream of said injection pump assembly, and in that a closure valve (5) for closing said feed pipe (1) is located immediately downstream of said injection pump assembly (Pi).

2. The device according to claim 1, in which the point of connection of said pipe (3) introducing additional liquid (E) to said fuel (C) feed pipe (1) is composed of a mixer (6) for said additional liquid (E) and said fuel (C).

3. The device according to claim 2, in which said mixer (6) is such that the drops of additional liquid present a size less than or equal to 0.5 mm.

4. The device according to any one of claims 1 to 3, in which said pipe (1) feeding fuel to said injection pumps (Pi) comprises a device (7) for measuring the flowrate of fuel circulating in said feed pipe (1), said measuring device (7) controlling a device (8) for regulating the flowrate of additional liquid injected into said feed pipe (1).

5. Method for feeding liquid fuel eventually mixed with an additional liquid (E) to a diesel-type I.C. engine (M), characterised in that for a load on said engine comprised between 20% and 50%, an injection pump assembly (Pi) of said engine (M) is fed by a first mode (A) by means of a pipe (1) in closed loop without introducing any additional liquid (E), and in that for any increase in the value of the load, said engine is fed by a second mode (B) by means of a pipe (1) in open loop by introducing additional liquid (E) immediately upstream of said injection pump assembly (Pi).

6. Method according to claim 5, characterised in that controlling a two-sided closure valve (5) situated immediately downstream of said injection pump assembly (Pi) makes it possible to go from the first feeding mode (A) to the second mode (B).

## Patentansprüche

1. Anordnung zur Flüssigbrennstoffzufuhr an eine Dieselbrennkraftmaschine, wobei die Vorrichtung eine Anordnung von Einspritzpumpen (Pᵢ) des Motors und eine Brennstoffzufuhrleitung (1) zu den Einspritzpumpen (Pᵢ) umfaßt, wobei die Brennstoffzufuhrleitung (1) einen Zufuhrkreislauf bildet und eine Leitung (2) zur Einführung des Brennstoffs (2), Mittel zur Behandlung und Zirkulation des Brennstoffs (C) und eine Leitung (3) zur Einführung von flüssigem Additiv (E) in den Brennstoff (C) umfaßt, **dadurch gekennzeichnet,** daß die Verbindungsstelle der Leitung (3) zur Einführung von flüssigem Additiv und der Brennstoffzufuhrleitung (1) unmittelbar stromaufwärts der Anordnung der Einspritzpumpen gelegen ist und daß ein Absperrventil (5), welches in der Lage ist die Brennstoffzufuhrleitung (1) zu verschließen, unmittelbar stromabwärts der Anordnung der Einspritzpumpen (Pᵢ) gelegen ist.

2. Vorrichtung nach Anspruch 1, in welcher die Verbindungsstelle der Leitung (3) zum Einführen von flüssigem Additiv (E) mit der Brennstoffzufuhrleitung (1) durch einen Mischer (6) für flüssiges Additiv (E) und Brennstoff (C) gebildet wird.

3. Vorrichtung nach Anspruch 2, bei welcher der Mischer (6) so ausgebildet ist, daß die Tropfen des flüssigen Additivs eine Größe von weniger oder gleich 0,5 mm besitzen.

4. Vorrichtung nach einem der Ansprüche 1 bis 3, bei welcher die Brennstoffzufuhrleitung (1) der Einspritzpumpen (Pᵢ) eine Meßeinrichtung (7) für den Durchfluß des in der Brennstoffzufuhrleitung (1) zirkulierenden Brennstoffs umfaßt, wobei die Durchflußmeßeinrichtung (7) eine Durchflußregeleinrichtung (8) für das flüssige Additiv steuert, welches in die Brennstoffzufuhrleitung (1) eingespritzt wird.

5. Verfahren zur Versorgung einer Diesekraftmaschine (M) mit flüssigem Brennstoff, der gegebenenfalls mit einem flüssigen Additiv (E) gemischt ist, **dadurch gekennzeichnet,** daß, bei einer Motorlast zwischen 20 und 50 % eine Anordnung von Einspritzpumpen (Pᵢ) des Motors (M) durch eine erste Betriebsweise (1) mittels einer Leitung (1) in einem geschlossenen Kreislauf ohne die Einführung von flüssigem Additiv (E) versorgt wird und daß für jede Zunahme des Werts der Motorlast der Motor über eine zweite Betriebsweise (B) mittels einer Leitung (1) in einem geöffneten Kreislauf mit der Einführung von flüssigem Additiv (E) unmittelbar stromaufwärts der Anordnung der Einspritzpumpen (Pᵢ) versorgt wird.

6. Verfahren nach Anspruch 5, **dadurch gekennzeichnet,** daß von der ersten Betriebsweise zur versorgung (A) zu der zweiten Betriebsweise durch Ansteuerung eines Zweiwege-Absperrventils (5) übergegangen wird, welches unmittelbar stromabwärts der Anordnung der Einspritzpumpen (Pᵢ) gelegen ist.
